# EUROPÄISCHE PATENTSCHRIFT

(11) **EP 1 106 344 B1**
(45) Veröffentlichungstag und Bekanntmachung des Hinweises auf die Patenterteilung: **14.02.2007**
(21) Anmeldenummer: 00124606.5
(22) Anmeldetag: 10.11.2000
(51) Int. Cl.: B32B 27/32, B32B 5/18, B32B 27/04, E04C 2/24, B29C 70/08, B29B 17/00, B32B 37/04, B60R 13/01, B60R 13/08, B60R 13/02

(54) **Sandwichplatte**
Sandwich panel
Panneau sandwich

(30) Priorität: 10.12.1999 DE 19959652
(43) Veröffentlichungstag der Anmeldung: 13.06.2001
(73) Patentinhaber: BASF Aktiengesellschaft, 67056 Ludwigshafen (DE)
(72) Erfinder: Möck, Christof, Dr., 68259 Mannheim (DE); Tatzel, Hermann, 69469 Weinheim (DE)

(56) Entgegenhaltungen:
- EP-A- 0 657 281
- EP-A- 0 771 644
- DE-A- 3 722 873
- DE-A- 19 544 451

## Beschreibung

Die Erfindung betrifft eine Sandwichplatte aus
A. einer Kernschicht aus Polypropylen-Partikelschaum,
B. Deckschichten aus faserverstärktem Polypropylen, sowie gegebenenfalls
C. Dekorschichten.

Derartige Sandwichplatten sind bekannt, z.B. aus DE-A 195 44 451. Sie werden zur Herstellung von Kraftfahrzeugteilen verwendet. Bei deren Herstellung durch Stanzen fällt erheblicher Verschnitt an. Der Erfindung lag nun die Aufgabe zugrunde, diesen Verschnitt einer sinnvollen Verwertung zuzuführen.

Es wurde überraschenderweise gefunden, daß der Verschnitt in zerkleinerter Form in Mengen von 1 bis 10 Gew.-% bei der Herstellung von Schaumstoffplatten zugesetzt werden kann, und daß daraus neue Sandwichplatten mit nur unwesentlich verschlechterten mechanischen Eigenschaften hergestellt werden können.

Gegenstand der Erfindung ist demzufolge eine Sandwichplatte nach Anspruch 1. Ein weiterer Gegenstand der Erfindung ist ein Verfahren zur Herstellung einer Schaumstoffplatte nach Anspruch 5.

Das Polypropylen des Partikelschaums der Kernschicht kann ein Homopolymeres sein oder ein Copolymeres mit 0,5 bis 15 Gew.-% Ethen und/oder Buten-1. Sein Kristallitschmelzpunkt liegt im allgemeinen zwischen 120° und 170°C. Die Schaumpartikel werden hergestellt durch Imprägnieren von Polypropylen-Minigranulat mit einem flüchtigen Treibmittel in wässriger Suspension und Entspannen unter Aufschäumen. Auch die Schaumextrusion ist möglich. Die Partikelgröße liegt wie üblich zwischen 2 und 8 mm, die Schüttdichte zwischen 10 und 100 g/l.

Das Polypropylen der Deckschichten ist ein Homopolymeres oder ein (Pfropf-)Copolymer mit Maleinsäureanhydrid oder Acrylsäure. Die Deckschichten enthalten vorzugsweise 10 bis 60 Gew.-% Glas-, Natur- oder Kunststoff-Fasern in Form von Matten, Gelegen, Geweben oder Kurzfasern. Bevorzugt ist ein mit 20 bis 50 Gew.-% Glasmatten verstärktes Polypropylen (GMT).

Die Dekorplatten bestehen aus einem Faservlies aus Polyester oder Polyamid, aus Kunststoff-Folien oder aus einer gegebenenfalls mit einer Folie laminierten Schaumfolie. Sie können auch eingefärbt sein.

Die Kernschicht enthält erfindungsgemäß 1 bis 10, vorzugsweise 2 bis 10 Gew.-% Recylatpartikel aus den Komponenten A, B und ggf. C. Es handelt sich dabei um Recyclat, das z.B. beim Herstellen D von Kraftfahrzeugteilen durch Stanzen von Sandwichplatten als Verschnitt anfällt. Auch entsprechende Teile aus Altautos können verwendet werden. Diese Abfallteile werden zerkleinert, beispielsweise in Mühlen mit Siebeinsätzen, wobei die Schaumstruktur der Kernschicht im wesentlichen erhalten bleibt und das Poly-propylen nicht aufschmilzt. Gegebenenfalls kann ein Teil der Fasern durch eine Zylindersiebmaschine abgetrennt werden. Das Recyclingmaterial weist eine mittlere Korngröße von 5 bis 10, vorzugsweise von 6 bis 8 mm auf. Dieses Material wird dann in Mengen von 1 bis 10 Gew.-% mit frischen Polypropylen-Schaumpartikeln vorgemischt und dem Füllbehälter einer Formteilmaschine zugeführt. Dort werden die Partikel in bekannter Weise mit Wasserdampf zu einer Schaumstoffplatte verschweißt.

Diese Schaumstoffplatte wird dann vorzugsweise als Kernschicht A bei der Herstellung der erfindungsgemäßen Sandwichplatte eingesetzt. Dazu werden zunächst beiden Flächen von zwei Deckschichtplatten B auf etwa 200°C erwärmt, und auf jeweils eine der Flächen wird das Dekormaterial C aufgelegt. Dann wird zwischen die beiden Deckschichten eine Schaumstoffplatte A eingebracht und der Verbund in ein Tiefziehwerkzeug eingelegt und verformt. Auch das Verpressen der Schichten bei Temperaturen oberhalb des Exweichungspunktes von Polypropylen ist möglich.

Die Dicke der Kernschicht A liegt zwischen 3 und 20 mm, die der Deckschichten zwischen 0,5 und 2 mm, die Dekorschichten können als Faservlies oder als Schaumfolie 1 bis 5 mm dick sein, als Kunststoff-Folien 1 bis 3 mm.

Bei Recyclat-Konzentrationen in der Kernschicht bis zu 10 Gew.-% ist keine signifikante Verschlechterung der Festigkeitswerte festzustellen.

Die erfindungsgemäßen Sandwichplatten können zur Herstellung von Kraftfahrzeugteilen, wie Kofferraumböden, Hutablagen und Seitentürverkleidungen dienen.

## Patentansprüche

1. Sandwichplatte, bestehend aus
A. einer Kernschicht aus Polypropylen-Partikelschaumauf Basis von Schaumpartikeln mit einer Partikelgröße zwischen 2 und 8 mm und einer Schüttdickte zwischen 10 und 100 g/l,
B. Deckschichten aus faserverstärktem Polypropylen, sowie gegebenenfalls
C. Dekorschichten,
**dadurch gekennzeichnet, daß** die Kernschicht 1 bis 10 Gew.-% Recyclatpartikel enthält, die aus zerkleinertem Material mit einer mittleren Korngröße von 5 bis 10 mm aus den Komponenten A, B und ggf. C bestehen.

2. Sandwichplatte nach Anspruch 1, **dadurch gekennzeichnet, daß** die Deckschichten B 10 bis 60 Gew.-% Glas-, Natur- oder Kunststoff-Fasern in Form von Matten, Gelegen, Geweben oder Kurzfasern enthalten.

3. Sandwichplatte nach Anspruch 2, **dadurch gekennzeichnet, daß** die Deckschichten 20 bis 50 Gew.-% Glasmatten enthalten.

4. Sandwichplatte nach Anspruch 1, **dadurch gekennzeichnet, daß** die Dekorplatte aus einem Faservlies, einer Kunststoff-Folie oder aus einer gegebenenfalls laminierten Schaumfolie besteht.

5. Verfahren zur Herstellung einer Schaumstoffplatte, **dadurch gekennzeichnet, daß** man Abfallstücke aus Sandwichplatten mit den Komponenten A, B und ggf. C gemäß Anspruch 1 auf eine mittlere Korngröße von 5 bis 10 mm zerkleinert und 1 bis 10 Gew.-% des zerkleinerten Materials zusammen mit 99 bis 90 Gew.-% Polypropylen-Schaumpartikel in einer Form verschweißt.

6. Verfahren zur Herstellung der Sandwichplatte nach Anspruch 1, **dadurch gekennzeichnet, daß** man nach Anspruch 5 hergestellte Schaumstoffplatte als Komponente A mit Deckschichten B und ggf. Dekorschichten C bei Temperaturen oberhalb des Erweichungspunktes von Polypropylen in einem Tiefziehwerkzeug verbindet.

## Claims

1. A sandwich panel comprising
A. a core layer of polypropylene particle foam based on foam particles having a particle size in the range from 2 to 8 mm and a bulk density in the range from 10 to 100 g/l,
B. cover layers of fiber-reinforced polypropylene and also if appropriate
C. decorative layers,
wherein the core layer comprises from 1 to 10% by weight of recyclate particles consisting of comminuted material having an average particle size in the range from 5 to 10 mm and composed of the components A, B and, if appropriate, C.

2. The sandwich panel according to claim 1, wherein the cover layers B comprise from 10 to 60% by weight of glass, natural or polymeric fibers in the form of mats, nonwoven scrims, wovens or short fibers.

3. The sandwich panel according to claim 2, wherein the cover layers comprise from 20 to 50% by weight of glass mats.

4. The sandwich panel according to claim 1, wherein the decorative panel comprises a fiber web, a polymeric film or a laminated or unlaminated foam film.

5. A process for producing a foam panel, which comprises waste pieces of sandwich panels comprising components A, B and if appropriate C according to claim 1 being comminuted to an average particle size of from 5 to 10 mm and from 1 to 10% by weight of comminuted material being welded together with from 99 to 90% by weight of polypropylene foam particles in a mold.

6. A process for producing the sandwich panel according to claim 1, which comprises bonding a foam panel produced according to claim 5 as component A to cover layers B and if appropriate decorative layers C in a thermoforming mold at temperatures above the softening point of polypropylene.

## Revendications

1. Panneau sandwich constitué
A. d'une couche de noyau en mousse de particules de polypropylène à base de particules mousse ayant une taille de particule entre 2 et 8 mm et une masse volumique apparente entre 10 et 100 g/l,
B. de couches de recouvrement à base de polypropylène renforcé par des fibres, ainsi qu'éventuellement
C. de couches décoratives,
**caractérisé en ce que** la couche de noyau contient 1 à 10 % en poids de particules de produit de recyclage qui sont constituées à partir d'une matière fragmentée présentant une granulométrie moyenne de 5 à 10 mm à base des composants A, B et éventuellement C.

2. Panneau sandwich suivant la revendication 1, **caractérisé en ce que** les couches de recouvrement B contiennent 10 à 60 % en poids de fibres de verre, naturelles ou synthétiques sous la forme de mats, de produits plissés, de tissus ou de fibres broyées.

3. Panneau sandwich suivant la revendication 2, **caractérisé en ce que** les couches de recouvrement contiennent 20 à 50 % en poids de mats de verre.

4. Panneau sandwich suivant la revendication 1, **caractérisé en ce que** la plaque décorative est constituée d'un non-tissé à base de fibres, d'une feuille de matière synthétique ou d'une feuille mousse éventuellement laminée.

5. Procédé de préparation d'un panneau à base de mousse, **caractérisé en ce qu'**on fragmente des déchets en morceaux de panneaux sandwich comportant les composants A, B et éventuellement C suivant la revendication 1 à une granulométrie moyenne de 5 à 10 mm et on soude dans un moule 1 à 10 % en poids de la matière fragmentée conjointement à 99 à 90 % en poids de particules de mousse de polypropylène.

6. Procédé de préparation du panneau sandwich suivant la revendication 1, **caractérisé en ce que**, dans un outil d'emboutissage, on relie des panneaux à base de mousse préparés suivant la revendication 5, comme composant A, avec des couches de recouvrement B et éventuellement des couches décoratives C, à des températures supérieures au point de ramollissement du polypropylène.
